# EUROPÄISCHE PATENTSCHRIFT

(11) **EP 3 527 297 B1**
(45) Veröffentlichungstag und Bekanntmachung des Hinweises auf die Patenterteilung: **05.08.2026**
(21) Anmeldenummer: 19150361.4
(22) Anmeldetag: 04.01.2019
(51) Int. Cl.: B21D 3/16, B21D 3/10

(54) **VERFAHREN ZUM RICHTEN VON RUNDLAUF- ODER GRADHEITSFEHLERN AN LANG GESTRECKTEN WERKSTÜCKEN SOWIE HIERFÜR MESSVORRICHTUNG, RICHTMASCHINE UND RICHTSYSTEM**
METHOD FOR CORRECTING ROUNDNESS OR STRAIGHTNESS ERRORS AFFECTING ELONGATED WORKPIECES AND MEASURING DEVICE, CORRECTION MACHINE AND CORRECTION SYSTEM
PROCÉDÉ DE DRESSAGE DES ERREURS DE CONCENTRICITÉ OU DE RECTITUDE SUR DES PIÈCES OBLONGUES AINSI QUE DISPOSITIF DE MESURE, MACHINE DE DRESSAGE ET SYSTÈME DE DRESSAGE CORRESPONDANT

(30) Priorität: 05.01.2018 DE 102018000022
(43) Veröffentlichungstag der Anmeldung: 21.08.2019
(73) Patentinhaber: M A E Maschinen- und Apparatebau Götzen GmbH, 40699 Erkrath (DE)
(72) Erfinder: MITZE, Manfred, 58300 Wetter (DE)
(74) Vertreter: Grosse Schumacher Knauer von Hirschhausen Schloss Schellenberg

(56) Entgegenhaltungen:
- EP-A2- 2 055 403
- DE-A1- 102014 105 780
- DE-A1- 19 739 368
- DE-A1- 19 920 003

## Beschreibung

### GEBIET DER ERFINDUNG

Die Erfindung betrifft ein Verfahren zum Richten von Rundlauf- oder Gradheitsfehlern an einem lang gestreckten Werkstück mit mindestens einem Verzahnungsbereich, wie an einer Zahnwelle oder an einer Zahnstange mit den Merkmalen des Oberbegriffs der Ansprüche 1, eine Messvorrichtung hierfür mit den Merkmalen des Oberbegriffs des Anspruchs 9 und eine Richtmaschine respektive ein Richtsystem mit den Merkmalen des Oberbegriffs des Anspruchs 10 respektive 11. Demnach ist vorgesehen, dass Referenzwerte wie die eine Bezugsebene bildenden Lagen der Oberflächen des noch nicht gerichteten Werkstücks auf dem oder an dem oder im Bereich des, zumindest jedoch mehr oder minder nahe, des Teilkreises der aktiven Verzahnung respektive des aktiven, zwischen den Hoch- und Tiefpunkten der Zähne liegenden Betriebswälzkreises der Verzahnung zur Ermittlung von Abweichungen vom ideal geraden Werkstück zumindest punkt- oder abschnittsweise abgetastet werden und die resultierenden Messdaten von der Richtmaschine derart genutzt werden, dass ein möglichst ideal gerades Werkstück, zumindest im Verzahnungsbereich, durch das Richten erzielt wird. Als Referenzwerte kommen ferner in Frage Kugeleintauchmaße eines Kugelmesskopfes oder andere an sich bekannte Geometriewerte der jeweiligen Verzahnungsgeometrie.

### TECHNOLOGISCHER HINTERGRUND

Die Lenkung von Personenwagen erfolgt heute praktisch ausschließlich durch Systeme mit Ritzel und Zahnstange, im Regelfall unterstützt durch elektrische oder hydraulische Hilfsantriebe. Die eingesetzten Zahnstangen sind wegen der hohen Belastung und der erforderlichen Verschleißfestigkeit wärmebehandelt, hierbei kommt es zu einem starken Verzug von bis zu 10 mm Krümmung.

Die spätere Verwendung der Zahnstangen erfordert enge Gradheitstoleranzen bis herab zu 0,05 mm. In der Fertigung solcher Zahnstange werden daher seit langem automatische Richtmaschinen eingesetzt, bekannt etwa aus der WO 93/23184 oder aus der EP 2 055 403 A2, die die Basis für die Oberbegriffe der unabhängigen Ansprüche bildet.

In solchen Anlagen wird die Gradheit in Regelfall taktil vermessen, die eingesetzten Taster erfassen die Lage/Position der Zähne am Zahnkopf.

Für die spätere Funktion der Zahnstange ist jedoch nicht ihre Gradheit in der Ebene der Zahnköpfe erforderlich, sondern diejenige im Teilkreis der aktiven Verzahnung. Werden die Zahnstangen durch ein spanendes Herstellungsverfahren erzeugt, so ist das Abstandsmaß Zahnkopf zu Teilkreis sehr konstant. Damit reicht eine Messung des Zahnkopfs aus, um eine Gradheit auch des aktiven Verzahnungsbereichs sicherzustellen.

Mit stark zunehmendem Anteil werden jedoch Zahnstangen durch einen Massivumformungsprozess erzeugt, wie etwa in der DE 199 20 003 A1 erwähnt wird. Mit einem Gesenkwerkzeug wird dabei in einer Schmiedepresse die Verzahnung im Fertigzustand erzeugt, ohne mechanische Nacharbeit. Aus verschiedenen Gründen kann beim Umformen der Abstand Zahnkopf-Teilkreis allerdings nicht zuverlässig konstant erzeugt werden. Die Höhe des Zahnkopfs schwankt vielmehr von Charge zu Charge um bis zu 0,2 mm. Aber auch über die Verzahnungslänge eines einzigen Werkstücks hinweg sowie von Werkstück zu Werkstück sind deutliche Schwankungsbreiten vorhanden.

Dies führt dazu, dass die Messtechnik der Richtanlage von Charge zu Charge kalibriert werden muss, zudem ist wegen der Schwankung innerhalb eines Werkstücks und von Werkstück zu Werkstück eine Verminderung der eingestellten Richttoleranz notwendig, mit entsprechend negativen Folgen für die Taktzeit. Wenn keine Messung der Teilkreisebene oder zumindest mehr oder minder nahe des aktiven, zwischen den Hoch- und Tiefpunkten der Zähne liegenden Betriebswälzkreises der Verzahnung erfolgt, kann zudem keine 100%-Sicherheit der Gradheitsmessung erreicht werden, insbesondere auch bei fehlerbehafteter Kalibrierung.

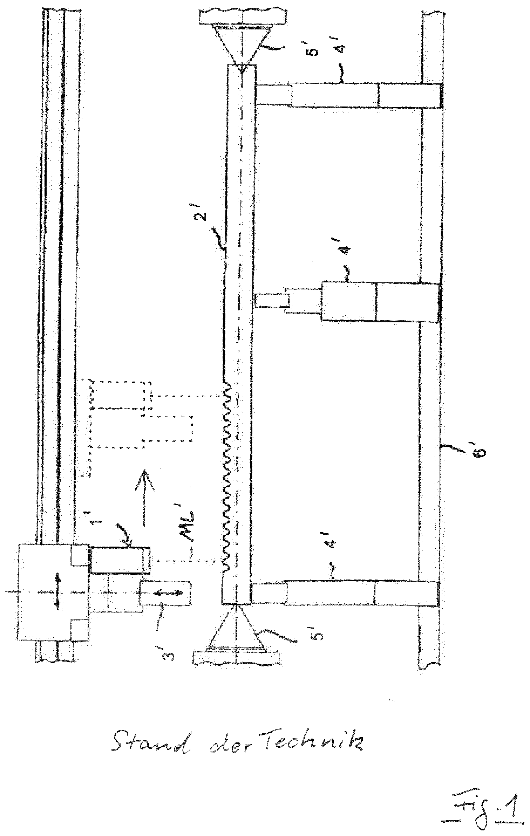

Voraussetzung für eine Verbesserung des Richtprozesses umgeformter Zahnstangen wäre also eine Vermessung in der Teilkreisebene oder zumindest mehr oder minder nahe des aktiven, zwischen den Hoch- und Tiefpunkten der Zähne liegenden Betriebswälzkreises der Verzahnung statt auf dem Zahnkopf. Dies ist mit konventioneller taktiler Messtechnik allerdings bislang kaum prozesssicher möglich. Eine stattdessen optische, insbesondere lasertechnische, berührungslose Messung, wie sie in der EP 2 055 403 A2, beschrieben wird, und wovon hier ausgegangen wird, ist prinzipiell für das Erreichen der angestrebten Verbesserung einsetzbar. Wie aus der dortigen Figur 6B, vorliegend als Fig. 1 zum Stand der Technik wiedergegeben, ersichtlich, wird ein langgestrecktes Werkstück 2' z. B. in Gestalt einer Lenkungszahnstange mit achsialer Verzahnung zwischen drehbaren Spitzen 5' einer Richtanlage eingespannt. Ein parallel zur Drehachse der Lenkungszahnstange verfahrbarer Richthammer 3' wirkt beim Richtvorgang auf die von achsial zueinander beabstandeten und auf einem Richttisch 6' angeordneten Richtambossen 4' gelagerten Lenkungszahnstange ein. Ein einen Messlichtstrahl ML' aussendender Lasertaster 1' ist gemeinsam mit dem Richthammer 3' parallel zur Drehachse der Lenkungszahnstange verfahrbar. In einer vor dem Richtvorgang durchzuführenden Messfahrt tastet der Messlichtstrahl ML' den Verzahnungsbereich zumindest mehr oder minder nahe des aktiven, zwischen den Hoch- und Tiefpunkten der Zähne liegenden Betriebswälzkreises der Verzahnung zur Ermittlung von Abweichungen vom ideal geraden Werkstück zumindest punkt- oder abschnittsweise berührungslos ab. Die resultierenden Messdaten werden von der Richtanlage derart genutzt, dass ein möglichst ideal gerades Werkstück, zumindest im Verzahnungsbereich, durch das Richten erzielt wird. Jedoch unterblieb bislang ein Einsatz des berührungslosen Messens häufig, weil, einerseits, die berührungslose Messung wegen der im Umfeld der realen Fertigung nicht immer vermeidbaren Oberflächenverschmutzungen oft nicht störungsfrei einsetzbar ist. Andererseits kostet die Lasermessung Zeit, was die Effizienz der Richtanlage beeinträchtigt.

### DARSTELLUNG DER ERFINDUNG

Ziel der vorliegenden Erfindung ist - insbesondere im Hinblick auf einen effizienteren Richtvorgang - eine Verbesserung der Verzahnungsmessung. Erwünscht ist insbesondere eine Messtechnik, die möglichst ohne Zeitverzug arbeitet, bevorzugt in einer, ggf. schmutzbehafteten, apparativen Werkstückfertigungs- und Bearbeitungs-Umgebung. Hierzu schlägt die Erfindung ein Verfahren mit den Merkmalen des Anspruchs 1 vor. Demnach werden die Höhenlagen der die Hochpunkte der Zähne bildenden Zahnköpfe des Verzahnungsbereichs (nachfolgend auch als Zahnkopfmaße bezeichnet) erfasst und steuer-/regeltechnisch weiterverarbeitet, bevorzugt auch die Höhenlagen von benachbarten, in der Bezugsebene liegenden Zahnoberflächen (nachfolgend auch als Kugelmaße bezeichnet) und die Höhendifferenzen der Höhenlagen der Zahnköpfe zu den Höhenlagen von benachbarten, in der Bezugsebene liegenden Zahnoberflächen ermittelt sowie die Höhendifferenzen als Korrektur-Messdaten so von der Richtmaschine genutzt, dass beim Richten des Werkstücks zu einem in der Bezugsebene möglichst ideal geraden Werkstück diese Höhendifferenzen berücksichtigt werden.

Durch die Erfindung wird u. A. erreicht, dass trotz variierender Zahnkopf-Teilkreis-Abstände der Zähne an Zahnwellen oder an Zahnstangen der Richthammer einer Richtanlage solcher Werkstücke seine Verformungskräfte direkt und ohne Zwischenfügen von Hilfswerkzeugen auf die Zahnköpfe ausüben kann, um das Werkstück in einer unterhalb der Zahnköpfe gelegenen Bezugsebene, wie mehr oder minder nahe des aktiven, zwischen den Hoch- und Tiefpunkten der Zähne liegenden Betriebswälzkreises der Verzahnung, das ungerichtete Werkstück in ein möglichst ideal gerades Werkstück umzuformen.

Es ist nun möglich, die Erfindung in verschiedener Weise auszuführen: So kann eine taktile Messvorrichtung mit einem Kugeltaster vorgesehen werden, die in einem ersten Schritt nur für die Bestimmung der Maßdifferenz Zahnkopf-Tasterkugel vorgesehen ist. Hierbei ist es möglich, durch ausreichend langsames axiales Verfahren der Messvorrichtung relativ zur Verzahnung des Werkstücks eine im Durchmesser vergleichsweise kleine Tasterkugel (Messkugel) an allen Zahnflanken auf-und abgleiten zu lassen. Damit kann nicht nur das Differenzmaß, sondern die gesamte Verzahnungskontur erfasst werden. Alternativ können - etwa zur Beschleunigung des Messverfahrens - einzelne Messpositionen bestimmt und angesteuert werden, an denen jeweils Höhen- respektive Differenzmessungen vorgenommen werden.

Grundsätzlich ist es ist möglich, die Differenzmaßbestimmung in die Richtmaschine zu integrieren. Unter Inkaufnahme einer verlängerten Taktzeit wären die beschriebenen Probleme bei der berührungslosen Messung vermeidbar, zudem ergäben sich deutliche Kostenvorteile.

Eine besonders effiziente Erfassung der Höhendifferenzwerte wird dann erreicht, wenn die Messeinrichtung mit einem an der Messeinrichtung beweglichen Messkopf ausgestattet ist und mit einem an dem Messkopf angeordneten Anschlagbereich sowie mit einem an dem Messkopf angeordneten und an dem Messkopf beweglichen Messtaster. Beim Vermessen des Verzahnungsbereichs des Werkstücks wird der Anschlagbereich entlang der Hochpunkte der Zähne des Verzahnungsbereichs entlanggeführt. Während des Entlangführens des Anschlagbereichs des Messkopfes wird der Messtaster entlang der Kontur der Verzahnung auf- und abgeführt. Die Position(en), insbesondere die Höhe(n), des Messtasters und die Position(en), insbesondere die Höhe(n) des Messkopfes werden dabei sensorisch erfasst. Der Anschlagbereich gleitet demnach entlang der Hochpunkte auf den Zähnen entlang und die Kugel des Messtasters bewegt sich entlang der Kontur der Verzahnung respektive der Zähne während dessen auf und ab.

Besonders bevorzugt ist es, die Verzahnungsmessung auszulagern und vor die Richtanlage zu verlegen. Die Anwendung solch einer vorgelagerten externen Verzahnungsmessung ist nicht nur auf längserstreckte Verzahnungen begrenzt, sondern für alle zeitintensiven Messoperationen anwendbar, deren Ergebnisse vorzugsweise in den Richtprozess und/oder in die Messprotokolle der Richtanlage einfließen sollen. Dies sind insbesondere umlaufende Lauf- und Steckverzahnungen, aber auch geometrische Merkmale wie Durchmesser- oder Längenmaße.

Da der Messvorgang bei einer vorgelagerten externen Verzahnungsmessung vorzugsweise zeitparallel zum Richten des vorangehend vermessenen Werkstücks stattfindet, wirkt sich der für die taktile oder eine berührungslose, beispielsweise optische, Verzahnungsmessung unweigerlich höhere Zeitaufwand nicht auf die Taktzeit des Richtens aus. Üblicherweise werden Richtzeiten zwischen 30 und 70 Sekunden benötigt. In einer solchen Zeitspanne könnten im ggf. sogar alle Zahnlücken taktil oder berührungslos vermessen werden. Die Messdaten können bevorzugt an eine gemeinsame Steuereinrichtung oder an eine gemeinsame Steuer- und Regelungseinrichtung übertragen werden, wobei die gemeinsame Steuer-/ Regeleinrichtung die Vermessung des Werkstücks und das Richten des Werkstücks steuert/regelt.

Das Verfahren mit einer Verzahnungs-Vermessung außerhalb der Richtmaschine läuft so ab, dass ein erstes Werkstück vermessen wird bevor es der Richtmaschine durch geeignete Fördermittel zugeführt wird. Die Messdaten werden an die Steuerung übertragen. Während das erste, vermessene Werkstück in der Richtmaschine gerichtete wird, wird bereits ein zweites Werkstück vor der Richtmaschine vermessen. Durch diese Prozessführung aus zeitgleichem Vermessen und Richten von zwei Werkstücken wird die Taktzeit der gesamten Werkstückbearbeitung erheblich optimiert. In der Praxis bedeutet diese Optimierung, dass für die meisten Produktionsabläufe, die einen Richtvorgang vorsehen, schneller gearbeitet werden kann, weswegen die Anzahl der erforderlichen Richtmaschinen reduziert werden kann. Dies bedeutet für den Werkstück-Hersteller respektive -Bearbeiter eine erhebliche Kosteneinsparung, die im Wesentlichen dadurch erzielt wird, dass durch den erfindungsgemäßen Verfahrensablauf Taktzeiten ohne Qualitätseinbußen verkürzbar werden und Richtvorgänge ohne Qualitätseinbußen schneller erledigbar werden.

Bei günstigen Umgebungsbedingungen kann die ausgelagerte Verzahnungsmessung - wie bereits erwähnt - auch mit einer berührungslosen Messtechnik ausgestattet werden. Vorteilhaft wäre dann, dass die Verzahnung dabei auch streifenförmig abgetastet werden kann, sodass dann nicht nur Messwerte entlang der Verzahnungsmittellinie, sondern über die gesamte Zahnbreite hinweg bestimmbar sind. Wegen der angeführten Praxisprobleme, aber auch zur Senkung der Kosten wird in der Regel aber angestrebt, die Erfassung des Differenzmaßes taktil durchzuführen.

Die Messvorrichtung kann entweder ein eigenes Grundgestell besitzen oder vorteilhaft in eine ohnehin vorhandene Förderstrecke (z. B. ein Kettenband) der Richtanlage integriert werden. Die Übergabe in die Richtmaschine erfolgt vorzugsweise mit bereits vorhandenen Einrichtungen (Hubbalkenförderer, Ladeportal, Roboter o.ä.).

Die für die Steuerung der Vorrichtungen erforderlichen, werkstückspezifischen Daten wie etwa konkrete Längspositionen z.B. für die Messung der Höhendifferenzen der Zahnköpfe zu den Lagen von benachbarten, in der Bezugsebene liegenden Zahnoberflächen, werden bevorzugt in der Steuerung der Richtmaschine gespeichert. Demnach ist nur eine Steuerung erforderlich, welche Richtvorgang und Messvorgang, insbesondere gleichzeitig, steuert, was die Effizienz des Richtvorgangs verbessert und was sich auf die Kosten reduzierend auswirkt.

Eine Verbesserung der Verzahnungsmessung ergibt sich schließlich durch eine Richtmaschine gemäß Anspruch 10 und durch ein Richtsystem gemäß Anspruch 11. Die Richtmaschine ist an eine Fördereinrichtung mit einer Förderstrecke koppelbar oder gekoppelt. Über die Fördereinrichtung wird der Richtmaschine ein Werkstück zugeführt und von der Richtmaschine wieder abgeführt. Die Richtmaschine umfasst eine, insbesondere hierin beschriebene, Messvorrichtung zur Verzahnungsmessung, wobei die Messvorrichtung in eine Förderstrecke der vor der Richtmaschine vorgesehenen Fördereinrichtung integrierbar ist oder integriert ist. Richtmaschine und Messvorrichtung sind durch zumindest eine Datenleitung zum Austausch von Messdaten für das Richten des Werkstücks verbunden. Bei dem Richtsystem ist eine Richtmaschine zum Richten von Rundlauf- oder Gradheitsfehlern an einem lang gestreckten Werkstück vorgesehen sowie eine Messvorrichtung mit einem Messkopf zum Vermessen der Verzahnung des Verzahnungsbereichs des lang gestreckten Werkstücks. Das Richtsystem ist dazu geeignet, ein hierin beschriebenes Richtverfahren zu verwenden oder durchzuführen. Die Richtmaschine und die Messvorrichtung des Richtsystems sind durch eine Datenleitung miteinander verbunden, wobei die Messvorrichtung bevorzugt gemäß einer hierin beschriebenen Messvorrichtung gebildet ist.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Biegerichtmaschine zum Richten von Rundlauf- oder Gradheitsfehlern an lang gestreckten Werkstücken mit mindestens einem Verzahnungsbereich, wie an Zahnwellen oder an Zahnstangen dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen:
- Fig. 1: eine Richtanlage für Zahnwellen oder Zahnstangen nach dem Stand der Technik (EP 2 055 403 A2) mit berührungsloser Verzahnungs-Vermessung,
- Fig. 2: eine Messeinrichtung nach der Erfindung zum Ermitteln der Höhendifferenzen zwischen den die Hochpunkte der Zähne eines Verzahnungsbereichs bildenden Zahnköpfen und den benachbarten, eine Bezugsebene bildende Lagen der Oberflächen des noch nicht gerichteten Werkstücks mehr oder minder nahe des aktiven, zwischen den Hoch- und Tiefpunkten der Zähne liegenden Teilkreises der Verzah- nung und/oder zum Ermitteln von Abweichungen vom ideal geraden Werkstück,
- Fig. 3: eine Zahnstange gemäß Figur 2 in Detaildarstellung und
- Fig. 4: eine Richtmaschine mit einer Messeinrichtung gemäß Figur 2 (schematisch, Blockschaltbild).

### DETAILLIERTE BESCHREIBUNG VON AUSFÜHRUNGSBEISPIELEN

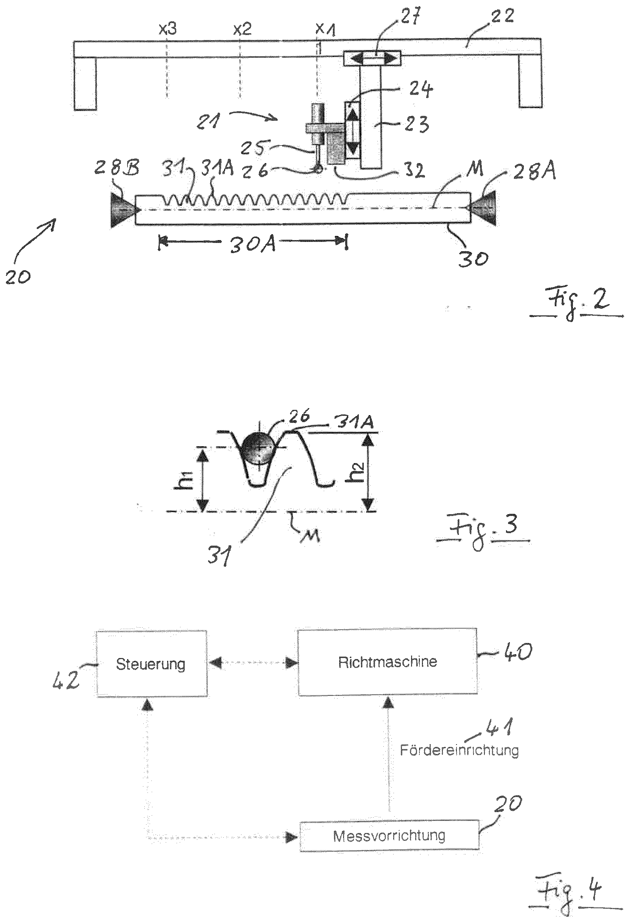

Eine Messeinrichtung 20 kann der Fig. 2 entnommen werden. Mit der Messeinrichtung kann eine Messung der Differenzen von Zahnkopfmaßen zu Kugelmaßen erfolgen. Wie aus Fig. 2 und ihrer nachfolgenden Erläuterung ersichtlich, verfügt eine beispielhaft dargestellte Messeeinrichtung 20 sowohl über Mittel zum Ermitteln der Höhendifferenzen zwischen den die Hochpunkte der Zähne eines Verzahnungsbereichs bildenden Zahnköpfen und den benachbarten, eine Bezugsebene bildende Lagen der Oberflächen des Werkstücks auf dem oder an dem oder im Bereich, zumindest jedoch mehr oder minder nahe, des, insbesondere aktiven, zwischen den Hoch- und Tiefpunkten der Zähne liegenden, Teilkreises respektive Betriebswälzkreises seiner Verzahnung als auch über Mittel zum Ermitteln von Abweichungen von einem ideal geraden Werkstück 30, wie der dargestellten Zahnstange. Beide Mittel können zu oder in einer Baugruppe zusammengefasst sein. Letztere Mittel werden durch eine zum Vergleich zwischen den tatsächlichen Messdaten in der Bezugsebene und gespeicherten Soll-Daten dienende Einrichtung bereitgestellt. Der Verzahnungsbereich 30A oder das gesamte Werkstück 30 wird zunächst axial und bezüglich seiner Winkellage ausgerichtet, wobei die Zähne 31 in Richtung eines Messkopfes 21 der Messeinrichtung 20 zeigen. Die dargestellten Ausrichtmittel 28A, 28B können, müssen aber nicht, an sich bekannte Drehspitzen sein.

Zum Erfassen der Differenzmaße verfügt Messeinrichtung 20 über eine Schlittenführung 22 entlang welcher ein angetriebener Schlitten 27 verfahrbar ist. Somit kann Schlitten 27 über die Verzahnungslänge und/oder über die gesamte Werkstücklänge hinweg bewegt werden, beispielsweise in die Positionen x1, x2 oder x3. Der Schlitten 27 verfügt über eine weitere, zur Schlittenführung 22 vorzugsweise orthogonal angeordnete Schlittenführung 23 für einen Schlitten 24. Damit ist der mit ihr verbundene Messkopf 21 aus einer oberen Ruheposition heraus in Richtung der Zähne absenkbar. Auf den Zähnen liegt bei abgesenktem Messkopf 21 der Anschlagbereich 32 auf. Der Messkopf 21 ist mit einem mechanisch oder, bevorzugt, elektrisch wirksamen, gewünschten Falls ein- und ausfahrbaren, insbesondere federbelasteten Messtaster 25 mit daran befestigter Tastkugel 26 versehen. Der Messtaster 25 vollzieht eine Auf-und-Ab-Bewegung, wenn der Anschlagbereich 32 auf den Zahnköpfen der Zähne aufliegend in Längserstreckung des Werkstücks entlang bewegt wird.

Ein Messvorgang kann folgenden Funktionsablauf mit den nachstehenden Funktionsschritten umfassen:
- Der, bevorzugt horizontal verfahrbare, Schlitten 27 wird über die zu vermessende/n Zahnlücke/n gefahren, (z.B. x1, x2 oder x3).
- Der, bevorzugt vertikal verfahrbare Schlitten 24 fährt abwärts, bis die Tastkugel 26 auf dem betroffenen Zahnkopf 31A der Zahnstange aufsetzt.
- Die am Messtaster 25 befestige Tastkugel 26 wird bei ihrem Aufsetzen auf den Zahnkopf 31A und jedem, dem Grunde nach beliebigen, daneben liegenden Bereich des Zahnes 31 (im Ausführungsbeispiel nach oben) verdrängt. Die "Verdrängungswege" können über den Messkopf 21 erfasst werden. Mit diesen Messwerten sind die Maßdifferenzen (Höhendifferenzen) der Höhenlagen der Zahnköpfe zu den Höhenlagen von benachbarten, in der Bezugsebene liegenden Zahnoberflächen ermittelt.
- Der Vorgang wird für mehrere, vorzugsweise alle, zu vermessenden Zahnlücken wiederholt.
- Mit der Übergabe des Werkstücks 30 in die Richtmaschine, z.B. gemäß Fig. 4, werden auch die zugehörigen Differenzwerte übertragen, sodass der eigentliche Richtvorgang dann relativ zum Zahnkopfmaß erfolgen kann.
- Mit bekanntem Differenzmaß kann die Richtmaschinensteuerung die nach dem Richtvorgang erreichten Kugelmaße aus den gemessenen Zahnkopfmaßen und den ermittelten Differenzmaßen bestimmen und anzeigen.

Fig. 3 zeigt einen vergrößerten Ausschnitt des Verzahnungsbereichs 30A aus Fig. 2. Dargestellt ist einerseits das Abstandsmaß h2 des Zahnkopfs 31A zur Werkstückmittellinie M und andererseits das Kugel-Eintauchmaß h1. Darunter versteht man den Abstand eines Kugelmittelpunktes zur Werkstückmitte. Der Kugeldurchmesser ist so gewählt, dass sie in etwa am Teilkreis die Zahnflanken (Bezugsebene) tangiert. Entscheidend für die präzise Funktion des Werkstücks ist die Exaktheit des Maßes h1, etwa bei der Zahnstange, z. B. einer Fahrzeug-Lenkung.

Bevorzugt kann die Messung außerhalb der Richtmaschine erfolgen. Um die Problematik der Taktzeiterhöhung des Richtprozesses durch die Kugelmaßerfassung zu umgehen, kann, wie z. B. aus dem Blockschaltbild gemäß Fig. 4 ersichtlich, ein Auslagern der Verzahnungsmessung aus der Richtmaschine 40, z. B. gemäß Fig. 2, vorgesehen sein, wonach die Messeinrichtung 20 der Richtmaschine 40 vorgelagert wird. Die durch die Messeinrichtung 20 ermittelten Differenzmaße "Zahnkopfmaß h2 minus Kugelmaß h1" werden der Steuerung der Richtmaschine 40 zugeführt, etwa über eine Datenleitung. Die Richtmaschine 40 arbeitet dann nur gegen die Zahnköpfe 31A, kann aber mit der jetzt bekannten Differenz Zahnkopf- minus Kugelmaß indirekt nach dem Kugelmaß messen und richten, ohne dass Taktzeitverluste entstehen. Die apparative Anordnung aus Richtmaschine 40 und (vor- oder ausgelagerter) Messeinrichtung 20 bildet ein Richtsystem, worin Richten und Messen unabhängig voneinander ablaufende Prozesse bilden. Erfindungsgemäß wird die Messstation vor der Richtanlage installiert. Die Ergebnisse der Messstation fließen in den Ablauf des Richtprozesses ein und werden, sofern zweckmäßig, gemeinsam mit den im Richtprozess erfassten Daten dokumentiert.

### BEZUGSZEICHENLISTE

| | | | |
|---|---|---|---|
| 1' | Lasertaster | 28A | Ausrichtmittel |
| 2' | Werkstück | 28B | Ausrichtmittel |
| 3' | parallel zur Drehachse des Werkstücks verfahrbarer Richthammer | 30 | Werkstück |
| | | 30A | Verzahnungsbereich |
| | | 31 | Zahn |
| 4' | Richtamboss | 31A | Zahnkopf |
| 5' | Spitze | 32 | Anschlagbereich |
| 6' | Richttisch | 40 | Richtmaschine |
| ML' | Messlichtstrahl | 41 | Fördereinrichtung |
| | | 42 | Steuerung |
| 20 | Messeinrichtung | | |
| 21 | Messkopf | h1 | Kugelmaß |
| 22 | Schlittenführung | h2 | Zahnkopfmaß |
| 23 | Schlittenführung | M | Werkstückmittellinie |
| 24 | Schlitten | x1 | Position |
| 25 | Messtaster | x2 | Position |
| 26 | Tastkugel | x3 | Position |
| 27 | Schlitten | | |

## Patentansprüche

1. Verfahren zum Richten von Rundlauf- oder Gradheitsfehlern an einem lang gestreckten Werkstück (30) mit mindestens einem, Hoch- und Tiefpunkte seiner Zähne (31) aufweisenden Verzahnungsbereich (30A), wie an einer Zahnwelle oder an einer Zahnstange, bei dem Referenzwerte zur Ermittlung von Abweichungen vom ideal geraden Werkstück (30) zumindest punkt- oder abschnittsweise abgetastet werden, und bei dem die resultierenden Messdaten von einer Richtmaschine so genutzt werden, dass ein möglichst ideal gerades Werkstück, zumindest im Verzahnungsbereich, durch das Richten erzielt wird,wobei die Höhenlagen der die Hochpunkte der Zähne (31) bildenden Zahnköpfe (31A) des Verzahnungsbereichs (30A) sowie die Höhenlagen von benachbarten, in der Bezugsebene liegenden Zahnoberflächen taktil erfasst werden, wobei die Höhendifferenzen der Höhenlagen der Zahnköpfe (31A) zu den Höhenlagen von benachbarten, in der Bezugsebene liegenden Zahnoberflächen ermittelt werden, und wobei die Höhendifferenzen als Korrektur-Messdaten so von der Richtmaschine genutzt werden, dass beim Richten des Werkstücks (30) zu einem in der Bezugsebene möglichst ideal geraden Werkstück (30) diese Höhendifferenzen berücksichtigt werden, **dadurch gekennzeichnet, dass** eine Messeinrichtung (20) verwendet wird, mit einem an der Messeinrichtung (20) beweglichen Messkopf (21), mit einem an dem Messkopf (21) angeordneten Anschlagbereich (32) und mit einem an dem Messkopf (21) angeordneten und an dem Messkopf (21) beweglichen Messtaster (25), wobei beim Vermessen des Verzahnungsbereichs (30A) des Werkstücks (30) der Anschlagbereich (32) entlang der Hochpunkte der Zähne (31) des Verzahnungsbereichs (30A) entlanggeführt wird, wobei während des Entlangführens des Anschlagbereichs (32) des Messkopfes (21) der Messtaster (25) entlang der Kontur der Verzahnung (30A) auf- und abgeführt wird, und wobei die Position, insbesondere die Höhe, des Messtasters (25) und/oder die Position, insbesondere die Höhe des Messkopfes (21) sensorisch erfasst wird.

2. Verfahren nach Anspruch 1, **dadurch gekennzeichnet, dass** Referenzwerte wie eine Bezugsebene bildenden Lagen der Oberflächen des noch nicht gerichteten Werkstücks auf der oder an der oder im Bereich, zumindest jedoch mehr oder minder nahe, des aktiven, zwischen den Hoch- und Tiefpunkten der Zähne liegenden, Teilkreises der Verzahnung, berücksichtigt werden.

3. Verfahren nach Anspruch 1 oder 2, **dadurch gekennzeichnet, dass** für die Bestimmung der Höhendifferenzen eine taktile Messeinrichtung (20) mit einem Kugeltaster verwendet wird.

4. Verfahren nach Anspruch 3, **dadurch gekennzeichnet, dass** eine Tastkugel (26) der Messeinrichtung (20) an den Zahnflanken der Zähne (31) des Verzahnungsbereichs (30A) auf- und abgleitet.

5. Verfahren nach einem der Ansprüche 1 bis 4, **dadurch gekennzeichnet, dass** eine vor dem Richten des Werkstücks erfolgende Vermessung des Werkstücks, insbesondere des Verzahnungsbereichs des Werkstücks, aus einer Richtmaschine ausgelagert und vor die Richtmaschine verlegt wird, und/oder dass eine vor dem Richten des Werkstücks erfolgende Vermessung des Werkstücks, insbesondere des Verzahnungsbereichs des Werkstücks, außerhalb einer Richtmaschine zum Richten des Werkstücks erfolgt.

6. Verfahren nach Anspruch 5, **dadurch gekennzeichnet, dass** die Messdaten an eine gemeinsame Steuereinrichtung (42) oder an eine gemeinsame Steuer- und Regelungseinrichtung übertragen werden, wobei die gemeinsame Steuer-/Regeleinrichtung (42) die Vermessung des Werkstücks und das Richten des Werkstücks steuert/regelt.

7. Verfahren nach einem der Ansprüche 5 oder 6, **dadurch gekennzeichnet, dass** ein Vermessen des Verzahnungsbereichs (30A) eines zweiten Werkstücks erfolgt während ein erstes, zuvor vermessenes Werkstück gerichtet wird.

8. Verfahren nach einem der Ansprüche 5 bis 7, **dadurch gekennzeichnet, dass** eine Messeinrichtung (20) zur Verzahnungsmessung in eine Förderstrecke einer vor der Richtmaschine (40) vorzusehenden Fördereinrichtung (41) der Richtmaschine integriert wird.

9. Messvorrichtung, mit
mindestens einem entlang einer Schlittenführung (22) parallel zu einem zu richtenden, länglichen, einen Verzahnungsbereich (30A) aufweisenden Werkstück (30) verfahrbaren Messkopf (21),
Mittel zum Ermitteln der Höhendifferenzen zwischen den die Hochpunkte der Zähne (31) eines Verzahnungsbereichs (30A) bildenden Zahnköpfen (31A) und den benachbarten, eine Bezugsebene bildenden Lagen der Oberflächen des Werkstücks (30) auf dem oder an dem oder im Bereich, zumindest jedoch mehr oder minder nahe, des aktiven, zwischen den Hoch- und Tiefpunkten der Zähne (31) liegenden, Teilkreises seiner Verzahnung, und mit
Mittel zum Ermitteln von Abweichungen von einem ideal geraden Werkstück (30),
wobei das oder die Mittel zum Ermitteln der Höhendifferenzen und das oder die Mittel zum Ermitteln von Abweichungen zu oder in einer Baugruppe zusammengefasst sind, **gekennzeichnet durch**
einen höhenverstellbaren Anschlagbereich (32), welcher auf den Hochpunkten der Zähne (31) des Verzahnungsbereichs (30A) auflegbar und/oder entlang der Hochpunkte führbar ist, und **durch**
einen höhenverstellbaren Messtaster (25), welcher relativ zu der Höhe des Anschlagbereichs (32) beweglich an der Messvorrichtung angeordnet ist, und welcher entlang der Kontur des Verzahnungsbereichs (30A) führbar ist.

10. Richtmaschine (40) zum Richten von Rundlauf- oder Gradheitsfehlern an lang gestreckten Werkstücken (30) mit mindestens einem Verzahnungsbereich (30A), wie von Zahnwellen oder Zahnstangen, wobei die Richtmaschine eine Fördereinrichtung mit einer Förderstrecke umfasst, womit der Richtmaschine das Werkstück zuführbar ist, **dadurch gekennzeichnet, dass** sie eine Messeinrichtung (20) mit einer Messvorrichtung nach Anspruch 9 zur Verzahnungsmessung umfasst, die in die Förderstrecke der Fördereinrichtung (41) integriert ist, und dass damit ein Verfahren nach einem der Ansprüche 1 bis 8 durchführbar ist.

11. Richtsystem umfassend eine Richtmaschine (40) zum Richten von Rundlauf- oder Gradheitsfehlern an einem lang gestreckten Werkstück (30) mit mindestens einem Verzahnungsbereich (30A), wie von einer Zahnwelle oder einer Zahnstange, umfassend eine Richtmaschine nach Anspruch 10, und umfassend eine Messvorrichtung mit einem Messkopf (21) zum Vermessen der Verzahnung des Verzahnungsbereichs (30A), wobei das Richtsystem ein Richtverfahren nach einem der Ansprüche 1 bis 8 durchführt, und wobei die Richtmaschine (40) und die Messvorrichtung durch eine Datenleitung miteinander verbunden sind, wobei die Messvorrichtung nach Anspruch 9 gebildet ist.

12. Richtmaschine (40) oder Richtsystem nach Anspruch 10 oder 11, **dadurch gekennzeichnet,**
**dass** das Vermessen des Verzahnungsbereichs (30A) des Werkstücks (30) punktuell, insbesondere an mehreren Messpositionen (x1, x2, x3), erfolgt, oder
**dass** das Vermessen des Verzahnungsbereichs (30A) des Werkstücks kontinuierlich über der Länge des Verzahnungsbereichs (30A) erfolgt.

## Claims

1. A method for correcting roundness or straightness errors affecting an elongated workpiece (30) with at least one toothed region (30A) having high and low points of its teeth (31), e.g. a toothed shaft or a toothed rack, in which method reference values for determining deviations from the ideally straight workpiece (30) are scanned at least pointwise or in sections and the resulting measurement data is used by a straightening machine in such a way that a workpiece, which is as ideally straight as possible at least in the toothed region, is achieved by means of straightening, wherein the elevations of the tooth crests (31A) of the toothed region (30A), which form the high points of the teeth (31), as well as the elevations of adjacent tooth surfaces lying in the reference plane, are detected in a tactile manner, wherein the height differences between the elevations of the tooth crests (31A) and the elevations of adjacent tooth surfaces lying in the reference plane are determined, and wherein the height differences are used as correction measurement data by a straightening machine in such a way that these height differences are taken into account when straightening the workpiece (30) to produce a workpiece (30) that is as straight as possible in the reference plane, **characterized by** the use of a measuring device (20) with a measuring head (21) that is movable on the measuring device (20), with a stop region (32) that is arranged on the measuring head (21) and with a measuring probe (25) that is arranged on the measuring head (21) and movable on the measuring head (21), wherein the stop region (32) is guided along the high points of the teeth (31) of the toothed region (30A) when the toothed region (30A) of the workpiece (30) is measured, wherein the measuring probe (25) is moved up and down along the contour of the toothing (30A) while the stop region (32) of the measuring head (21) is guided along the high points of the teeth of the toothed region, and wherein the position, particularly the height, of the measuring probe (25) and/or the position, particularly the height, of the measuring head (21) is detected by means of sensors.

2. The method according to claim 1, **characterized in that** reference values such as the positions of the surfaces of the not yet straightened workpiece, which form a reference plane on, at or in the vicinity of, but at least more or less close to the active pitch circle of the toothing lying between the high and low points of the teeth, are taken into account.

3. The method according to claim 1 or 2, **characterized in that** a tactile measuring device (20) with a ball probe is used for determining the height differences.

4. The method according to claim 3, **characterized in that** a probe ball (26) of the measuring device (20) slides up and down along the tooth flanks of the teeth (31) of the toothed region (30A).

5. The method according to one of claims 1 to 4, **characterized in that** a measurement of the workpiece, particularly of the toothed region of the workpiece, which takes place prior to straightening of the workpiece, is relocated out of a straightening machine so as to be carried out upstream of the straightening machine and/or **in that** a measurement of the workpiece, particularly of the toothed region of the workpiece, which takes place prior to straightening of the workpiece, is carried out outside a straightening machine for straightening the workpiece.

6. The method according to claim 5, **characterized in that** the measurement data is transmitted to a common open-loop control unit (42) or to a common open-loop and closed-loop control unit, wherein the common open-loop/closed-loop control unit (42) controls/regulates the measurement of the workpiece and the straightening of the workpiece.

7. The method according to one of claims 5 or 6, **characterized in that** a measurement of the toothed region (30A) of a second workpiece takes place while a previously measured first workpiece is straightened.

8. The method according to one of claims 5 to 7, **characterized in that** a measuring device (20) for measuring the toothing is integrated into a conveying section of a conveyor (41) of the straightening machine, which is to be arranged upstream of the straightening machine (40).

9. A measuring device, comprising
at least one measuring head (21) that is movable along a carriage guide (22) parallel to an elongated workpiece (30) to be straightened, which workpiece has a toothed region (30A),
means for determining the height differences between the tooth crests (31A) forming the high points of the teeth (31) of the toothed region (30A) and the adjacent positions of the surfaces of the workpiece (30) that form a reference plane on, at or in the vicinity of, but at least more or less close to, the active pitch circle of its toothing lying between the high and low points of the teeth (31), and comprising means for determining deviations from an ideally straight workpiece (30),
wherein the means for determining the height differences and the means for determining deviations are combined into or in a single assembly, **characterized by** a height-adjustable stop region (32) that can be placed on the high points of the teeth (31) of the toothed region (30A) and/or guided along the high points, and by
a height-adjustable measuring probe (25) that is arranged on the measuring device so as to be movable relative to the height of the stop region (32) and can be guided along the contour of the toothed region (30A).

10. A straightening machine (40) for correcting roundness or straightness errors affecting an elongated workpiece (30) with at least one toothed region (30A), e.g. a toothed shaft or a toothed rack, wherein the straightening machine comprises a conveyor with a conveyor section, by means of which the workpiece can be fed to the straightening machine, **characterized in that** it comprises a measuring unit (20) with a measuring device according to claim 9 that serves for measuring the toothing and is integrated into the conveyor section of the conveyor (41), and **in that** a method according to one of claims 1 to 8 can be carried out with said straightening machine.

11. A straightening system comprising a straightening machine (40) for correcting roundness or straightness errors affecting an elongated workpiece (30) with at least one toothed region (30A), e.g. a toothed shaft or a toothed rack, comprising a straightening machine according to claim 10 and a measuring device with a measuring head (21) for measuring the toothing of the toothed region (30A),
wherein the straightening system carries out a straightening method according to one of claims 1 to 8, wherein the straightening machine (40) and the measuring device are connected to one another via a data line, and wherein the measuring device is designed in accordance with claim 9.

12. The straightening machine (40) or the straightening system according to claim 10 or 11, **characterized in that** the measurement of the toothed region (30A) of the workpiece (30) takes place in certain points, particularly in several measuring positions (x1, x2, x3), or **in**
**that** the measurement of the toothed region (30A) of the workpiece takes place continuously over the length of the toothed region (30A).

## Revendications

1. Procédé de dressage des erreurs de concentricité ou de rectitude sur des pièces oblongues (30) avec au moins une zone de denture (30A) comportant des points hauts et bas de ses dents (31), comme sur un arbre denté ou une crémaillère, pour lequel des valeurs de référence pour déterminer des écarts de la pièce idéalement droite (30) sont palpés au moins de façon ponctuelle ou par endroits et pour lequel les données de mesure résultantes sont utilisées par une machine de dressage de telle manière qu'une pièce la plus idéalement droite possible, au moins dans la zone de la denture, est obtenue par dressage, sachant que les couches hautes des sommets de dents (31A) de la zone de denture (30A) formant les points hauts des dents (31) ainsi que les couches hautes des surfaces de dent voisine situées dans le plan de référence sont saisies de façon tactile, sachant que les différences de hauteur des couches hautes des sommets de dent (31A) sont déterminées par rapport aux couches hautes des surfaces de dent voisines situées dans le plan de référence et sachant que les différences de hauteur sont utilisées en tant que données de mesure de correction par la machine de dressage de telle manière que lors du dressage de la pièce (30) ces différences de hauteur sont prises en considération par rapport à une pièce (30) la plus idéalement droite possible dans le plan de référence, *caractérisé en ce qu*'un système de mesure (20) est utilisé, avec une tête de mesure (21) mobile sur le système de mesure (20), avec une zone de butée (32) disposée sur la tête de mesure (21) et avec un palpeur de mesure (25) disposé sur la tête de mesure (21) et mobile sur la tête de mesure (21), sachant que lors de la mesure de la zone de denture (30A) de la pièce (30), la zone de butée (32) est passée le long des points hauts des dents (31) de la zone de denture (30A), sachant que pendant le passage le long de la zone de butée (32) de la tête de mesure (21), le palpeur de mesure (25) est présenté et éloigné le long du contour de la denture (30A) et sachant que la position, en particulier la hauteur, du palpeur de mesure (25) et/ou la position, en particulier la hauteur, de la tête de mesure (21) est saisie par système de capteur.

2. Procédé selon la revendication 1, **caractérisé en ce que** des valeurs de référence, comme des couches formant un plan de référence des surfaces de la pièce pas encore dressée sont prises en considération sur ou près de ou dans la zone, au moins cependant plus ou moins près, du cercle primitif de référence de la denture actif, situé entre les points hauts et bas des dents.

3. Procédé selon la revendication 1 ou 2, **caractérisé en ce qu'**un système de mesure (20) tactile avec un palpeur à bille est utilisé pour la détermination des différences de hauteur.

4. Procédé selon la revendication 3, **caractérisé en ce qu'**une bille de palpage (26) du système de mesure (20) glisse et dérive sur les flancs de dent des dents (31) de la zone de denture (30A).

5. Procédé selon l'une quelconque des revendications 1 à 4, **caractérisé en ce qu'**une mesure de la pièce ayant lieu avant le dressage de la pièce, en particulier de la zone de denture de la pièce, est déplacée d'une machine de dressage et est transférée avant la machine de dressage et/ou **en ce qu'**une mesure de la pièce ayant lieu avant le dressage de la pièce, en particulier de la zone de denture de la pièce, a lieu en dehors d'une machine de dressage pour le dressage de la pièce.

6. Procédé selon la revendication 5, **caractérisé en ce que** les données de mesure sont transmises à un système de commande commun (42) ou à un système de commande et de régulation commun, sachant que le système de commande/de régulation commun (42) commande/régule la mesure de la pièce et le dressage de la pièce.

7. Procédé selon l'une quelconque des revendications 5 ou 6, **caractérisé en ce qu'**une mesure de la zone de denture (30A) d'une deuxième pièce a lieu pendant qu'une première pièce préalablement mesurée est dressée.

8. Procédé selon l'une quelconque des revendications 5 à 7, **caractérisé en ce qu'**un dispositif de mesure (20) pour la mesure de la denture est intégré dans une distance de transport d'un système de transport (41) à prévoir avant la machine de dressage (40).

9. Dispositif de dressage, avec
au moins une tête de mesure (21) déplaçable le long d'un guidage de chariot (22) parallèlement à une pièce (30) longitudinale, à dresser, comportant une zone de denture (30A),
des moyens pour déterminer les différences de hauteur entre les sommets de dent (31A) formant les points hauts des dents (31) d'une zone de denture (30A) et les couches voisines, formant un plan de référence des surfaces de la pièce (30) sur ou près de ou dans la zone, au moins cependant plus ou moins près, du cercle primitif de référence actif, situé entre les points hauts et bas des dents (31) de sa denture, et avec
des moyens pour déterminer des écarts d'une pièce (30) idéalement droite,
sachant que le ou les moyens pour déterminer les différences de hauteur et le ou les moyens pour déterminer des écarts sont réunis en ou dans un module, **caractérisé par**
une zone de butée réglable en hauteur (32), laquelle peut être posée sur les points hauts des dents (31) de la zone de denture (30A) et/ou déplacée le long des points hauts et par
un palpeur de mesure (25) réglable en hauteur, lequel est disposé de façon mobile sur le dispositif de mesure par rapport à la hauteur de la zone de butée (32) et lequel peut être déplacé le long du contour de la zone de denture (30A).

10. Machine de dressage (40) pour dresser des erreurs de concentricité ou de rectitude sur des pièces oblongues (30) avec au moins une zone de denture (30A), comme des arbres dentés ou des crémaillères, sachant que la machine de dressage comprend un système de transport avec une distance de transport, avec lequel la pièce est acheminée à la machine de dressage, **caractérisée en ce qu'**elle comprend un système de mesure (20) avec un dispositif de mesure, selon la revendication 9 pour la mesure de la denture, qui est intégré dans la distance de transport du système de transport (41), et **en ce qu'**un procédé selon l'une quelconque des revendications 1 à 8 peut être de ce fait exécuté.

11. Système de dressage comprenant une machine de dressage (40) pour dresser des erreurs de concentricité ou de rectitude sur des pièces oblongues (30) avec au moins une zone de denture (30A), comme d'un arbre denté ou une crémaillère, comprenant une machine de dressage selon la revendication 10, et comprenant un dispositif de mesure avec une tête de mesure (21) pour mesurer la denture de la zone de denture (30A),
sachant que le système de dressage effectue un procédé de dressage selon l'une quelconque des revendications 1 à 8, et sachant que la machine de dressage (40) et le dispositif de mesure sont reliés l'un à l'autre par une ligne de données, sachant que le dispositif de mesure est formé selon la revendication 9.

12. Machine de dressage (40) ou système de dressage selon
la revendication 10 ou 11, **caractérisé en ce que**
la mesure de la zone de denture (30A) de la pièce (30) a lieu de façon ponctuelle, en particulier sur plusieurs positions de mesure (x1, x2, x3),
ou
**en ce que** la mesure de la zone de denture (30A) de la pièce a lieu en continu sur la longueur de la zone de denture (30A).
